## Europäisches Patentamt
## European Patent Office
## Office européen des brevets

(19)

(11) Veröffentlichungsnummer : **0 131 059
B1**

(12) EUROPÄISCHE PATENTSCHRIFT

(45) Veröffentlichungstag der Patentschrift :
03.12.86

(21) Anmeldenummer : 83106240.1

(22) Anmeldetag : 27.06.83

(51) Int. Cl.⁴ : **B 29 C 65/40**

(54) Schweissgerät, insbesondere Dicknaht-Schweissgerät.

(43) Veröffentlichungstag der Anmeldung :
16.01.85 Patentblatt 85/03

(45) Bekanntmachung des Hinweises auf die Patenterteilung : 03.12.86 Patentblatt 86/49

(84) Benannte Vertragsstaaten :
AT BE CH FR GB IT LI NL

(56) Entgegenhaltungen :
DE-A- 2 823 171
KUNSTSTOFFE, Band 71, Nr. 10, Oktober 1981, München, H. VOWINKEL "Heizelement-, Warmgas- und
Extrusionsschweissen", Seiten 753-757

(73) Patentinhaber : Munsch Chemie-Pumpen GmbH
Im Staudchen 1
D-5412 Ransbach-Baumbach (DE)

(72) Erfinder : Munsch, Erich
Friedensstrasse 3
D-5432 Wirges (DE)

## Beschreibung

Die Erfindung betrifft ein Schweißgerät, insbesondere ein Dicknaht-Schweißgerät zur Verarbeitung von thermoplastischem Kunststoff-Schweißmaterial gemäß dem Oberbegriff des Anspruchs 1.

Ein derartiges Schweißgerät ist aus der DE-OS 28 23 171 bekannt. Dieses Schweißgerät hat sich in der Praxis vielfach bewährt. Das Gerät ist allerdings recht sperrig und schwer, so daß es nicht uneingeschränkt einsatzfähig war. Insbesondere bei Montage- und Reparaturarbeiten ist die Handhabung zu umständlich.

Aufgabe der Erfindung ist es deshalb, ein Schweißgerät zu schaffen, das bei gleicher oder besserer Leistung kompakter und leichter wird, wobei die Störanfälligkeit im Hinblick auf den Betrieb bei Montage und Reparatur herabgesetzt wird.

Dies wird mit den kennzeichnenden Merkmalen des Anspruchs 1 erreicht. Die Kopplung einer Förderschraube direkt mit dem Geräteantrieb führt zu einer besonders schlanken Einheit. Der Dickenausgleichsschieber, er verschwindet weitgehend in der Kontur des Gehäuses, ermöglicht die Verarbeitung von unterschiedlich dickem Schweißdraht ohne umständliche Einstellarbeiten.

Weitere zweckmäßige Ausbildungen der Erfindung sind den Unteransprüchen zu entnehmen.

So wird durch die axial hintereinander angeformten Bauteile sowie der Parallelführung des Kanals erreicht, daß der Schweißdraht bei der Zuführung, also im kalten, spröden Zustand nur geringfügig ausgelenkt werden muß.

Weiter bringt die besondere Kanal-Bildung den Vorteil, daß ein enorm großer Toleranzbereich in der Schweißdrahtdicke verarbeitet werden kann. Eine Einstellung an der Förderschraube ist nicht erforderlich.

Durch die Tiefenbegrenzung am Dickenausgleichsschieber ist auch ein Leerlauf des Gerätes unbedenklich, weil das Anpreßelement nicht die Förderschraube berührt.

Zwei Ausführungsbeispiele der Erfindung werden im folgenden an Hand der Zeichnungen näher erläutert. Es zeigen :

Figur 1 ein Schweißgerät, ohne Antrieb und Schweißschuh, im Längsschnitt.

Figur 2 ein Schnitt gemäß der Linie II-II in Fig. 1 und

Figur 3 eine Alternativlösung gemäß einer Ansicht nach Fig. 2 mit Spannfeder.

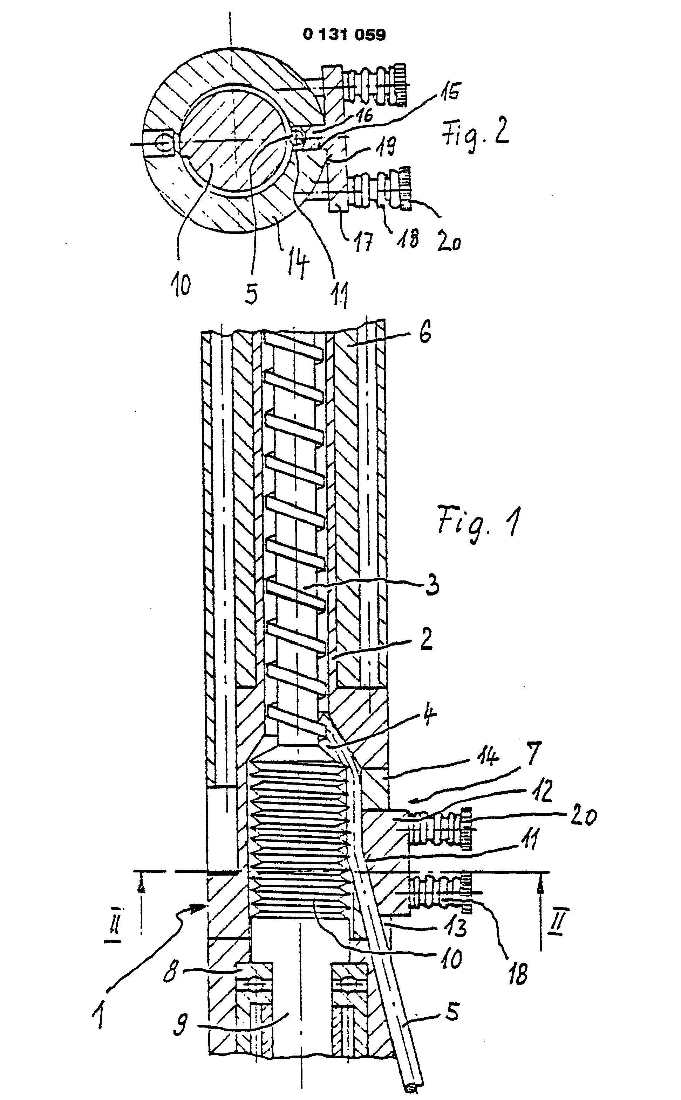

Nach Figur 1 besitzt ein Schweißgerät 1 eine längliche Förderkammer 2, in der ein Förderelement 3 angeordnet ist. Das Förderelement 3 ist antreibbar und hier als Schnecke ausgebildet.

An ihrem Anfang weist die Förderkammer 2 eine Einlaßöffnung 4 für einen Schweißdraht 5 auf. Den Auslaß aus der Förderkammer 2 bildet dabei ein nicht näher dargestelltes Schmelzrohr 6. Der Einlaßöffnung 4 ist eine Transportvorrichtung 7 für den Schweißdraht 5 zugeordnet. Im Bereich der Einlaßöffnung 4 wird innerhalb der Förderkammer 2 der Schweißdraht 5 zerkleinert und in ein Granulat umgeformt.

Das Zerkleinerungsorgan ist im vorliegenden Beispiel mit dem Förderelement 3 identisch und einseitig mittels eines kombinierten Radial-Axiallagers 8 gelagert.

Mit 9 ist die Welle des Geräteantriebes, z. B. eine Bohrmaschine oder auch ein spezieller Motor, gekennzeichnet.

Die Transporteinrichtung 7 setzt sich aus einer Förderschraube 10, sie ist einstückig mit dem Förderelement 3 und der Welle 9 ausgeführt, einem Kanal 11, einem Dickenausgleichsschieber 12 und einer Zuführöffnung 13 zusammen. Sie wird von einem Gehäuse 14 aufgenommen.

Der Dickenausgleichsschieber 12 ist in einem Schlitz 15 im Gehäuse 14 radial verschiebbar geführt und bildet mit einem Anpreßteil 16, dem Schlitz 15 und der Förderschraube 10 den Kanal 11.

Der Dickenausgleichsschieber 12 ist über die beiden Befestigungselemente 17 unter Zwischenschaltung von Anpreßfedern 18 am Gehäuse 14 befestigt.

Der Übergang Anpreßteil 16 zu dem Befestigungselementen 17 bildet dabei den Anschlag 19.

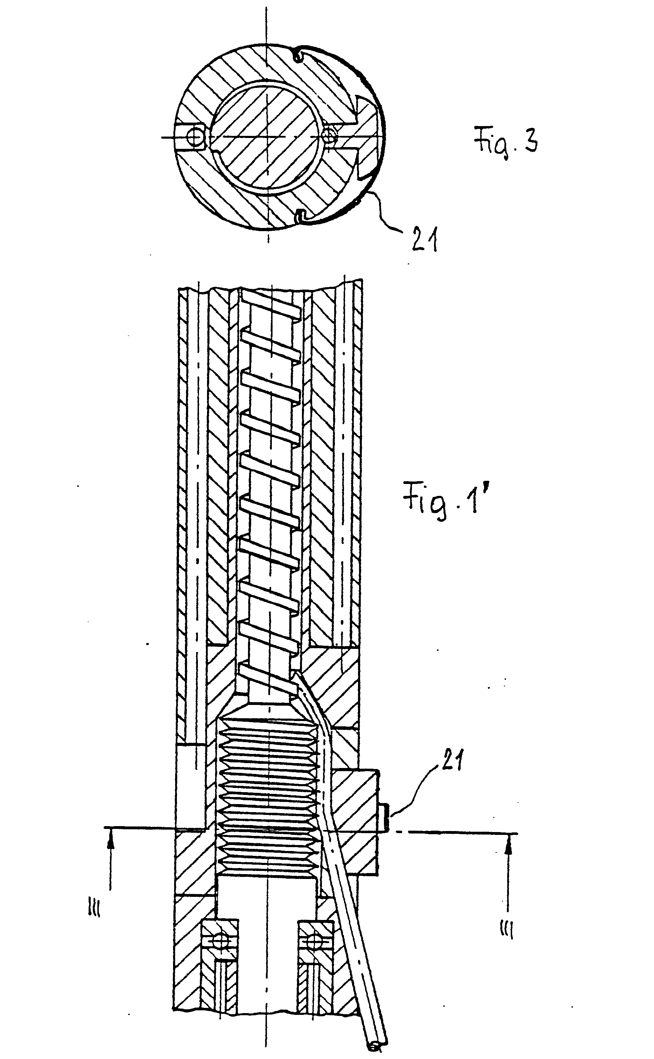

Im Ausführungsbeispiel gemäß den Fig. 1' und 3, Fig. 3 ist ein Schnitt gemäß der Linie III-III in Fig. 1', sind die Befestigungsschrauben 20 und die Anpreßfedern 18 durch eine am Gehäuse 14 verrastete Spannfeder 21 ersetzt. Die Befestigungselemente können dabei etwas kleiner ausgeführt werden.

Bezugszeichenliste

1 Schweißgerät
2 Förderkammer
3 Förderelement
4 Einlaßöffnung
5 Schweißdraht
6 Schmelzrohr
7 Transportvorrichtung
8 Radial-Axiallager
9 Welle
10 Förderschraube
11 Kanal
12 Dickenausgleichsschieber
13 Zuführöffnung
14 Gehäuse
15 Schlitz
16 Anpreßteil
17 Befestigungselement
18 Anpreßfeder
19 Anschlag
20 Befestigungsschraube
21 Spannfeder

## Patentansprüche

1. Schweißgerät, insbesondere Dicknaht-Schweißgerät, zur Verarbeitung von thermoplastischem Kunststoff-Schweißmaterial mit einem beheizbaren Schmelzrohr (6), einer Transportvorrichtung (7) für einen Schweißdraht (5), einem den Schweißdraht zu einem Granulat umformenden Zerkleinerungsorgan und einem Förderelement (3), bei dem die Transportvorrichtung, das Zerkleinerungsorgan und das Förderelement durch einen Geräteantrieb (9) antreibbar sind, bei dem das Förderelement in einer Förderkammer (2) angeordnet ist, an deren Anfang eine Einlaßöffnung (4) für den Schweißdraht und anschließend in der Förderkammer (2) das Zerkleinerungsorgan vorgesehen sind und bei dem Zerkleinerungsorgan und Förderelement (3) axial mit dem Geräteantrieb (9) gekoppelt sind, dadurch gekennzeichnet, daß die Transportvorrichtung (7) aus einer Förderschraube (10) sowie einem radial einstellbaren Dickenausgleichschieber (12) besteht und daß Förderschraube (10), Zerkleinerungsorgan und Förderelement (3) axial mit dem Geräteantrieb (9) gekoppelt sind.

2. Schweißgerät nach Anspruch 1, dadurch gekennzeichnet, daß der Schweißdraht (5) in einem parallel entlang der Förderschraube (10) verlaufenden Kanal (11) geführt ist.

3. Schweißgerät nach Anspruch 2, dadurch gekennzeichnet, daß der Kanal (11) durch einen Schlitz im Gehäuse (14) und den Dickenausgleichsschieber (12) gebildet ist.

4. Schweißgerät nach einem der Ansprüche 1 bis 3, dadurch gekennzeichnet, daß der Dickenausgleichsschieber (12) über eine Spannfeder (21) am Gehäuse (14) gegen den Schweißdraht (5) und dieser gegen die Förderschraube (10) gedrückt ist.

5. Schweißgerät nach einem der Ansprüche 1 bis 3, dadurch gekennzeichnet, daß der Dickenausgleichsschieber (12) im Querschnitt etwa T-förmig ausgebildet ist, wobei ein Schenkel das Anpreßteil (16) und die beiden anderen Schenkel die Befestigungselemente (17) bilden, wobei diese auch die Anpreßfedern (18) halten.

## Claims

1. Welding apparatus, in particular thick-seam welding apparatus, for the processing of thermoplastic welding material with a heatable melting barrel (6), a transport device (7) for a welding wire, a crushing member converting the welding wire into granules and a conveying element (3), in which the transport device, the crushing member and the conveying element can be driven by an apparatus drive (9), in which the conveying element is arranged in a conveying chamber (2), at the start of which an inlet orifice (4) for the welding wire and subsequently in the conveying chamber (2) the crushing member are provided, and in which crushing member and conveying element are coupled axially to the apparatus drive (9), characterized in that the transport device (7) consists of a conveying screw (10) and a radially adjustable thickness compensating slide (12) and in that conveying screw (10), crushing member and conveying element (3) are coupled axially to the apparatus drive (9).

2. Welding apparatus according to Claim 1, characterized in that the welding wire (5) is guided in a channel (11) running parallel along the conveying screw (10).

3. Welding apparatus according to Claim 2, characterized in that the channel (11) is formed by a slit in the housing (4) and the thickness compensating slide (12).

4. Welding apparatus according to one of Claims 1 to 3, characterized in that the thickness compensating slide (12) is pressed via a tension spring (21) on the housing (14) against the welding wire (5) and the latter is pressed against the conveying screw (10).

5. Welding apparatus according to one of Claims 1 to 3, characterized in that the thickness compensating slide (12) is designed approximately T-shaped in cross-section, one limb forming the pressing part (16) and the two other limbs forming the fastening elements (17), which also hold the pressing springs (18).

## Revendications

1. Appareil de soudage, en particulier appareil de soudage à cordon de soudure épais, pour la mise en œuvre d'une matière plastique thermoplastique de soudage, avec un tube de fusion (6) chauffant, un dispositif de transport (7) pour un fil de soudage (5), un organe de broyage transformant le fil de soudage en un granulat et un organe d'alimentation (3), dans lequel le dispositif de transport, l'organe de broyage et l'organe d'alimentation peuvent être mus par un mécanisme d'entraînement (9), dans lequel l'organe d'alimentation est disposé dans une chambre d'alimentation (2) au début de laquelle sont prévus un orifice d'entrée (4) pour le fil de soudage puis dans la chambre d'alimentation l'organe de broyage, et dans lequel l'organe de broyage et l'organe d'alimentation (3) sont couplés axialement avec le mécanisme d'entraînement (9), caractérisé en ce que le dispositif de transport (7) se compose d'une vis d'avance (10) ainsi que d'un coulisseau (12) d'égalisation d'épaisseur réglable radialement et en ce que la vis d'avance (10), l'organe de broyage et l'organe d'alimentation (3) sont couplés axialement avec le mécanisme d'entraînement (9) de l'appareil.

2. Appareil de soudage suivant la revendication 1, caractérisé en ce que le fil de soudage (5) est guidé dans un canal (11) courant parallèlement le long de la vis d'avance (10).

3. Appareil de soudage suivant la revendication 2, caractérisé en ce que le canal (11) est formé par une fente dans l'enceinte (14) et par le coulisseau (12) d'égalisation d'épaisseur.

4. Appareil de soudage suivant l'une des revendications 1 à 3, caractérisé en ce que le coulisseau (12) d'égalisation d'épaisseur est pressé contre le fil de soudage (5) et ce dernier est pressé contre la vis d'avance (10) par un ressort de tension (21) accroché à l'enceinte (14).

5. Appareil de soudage suivant l'une des revendications 1 à 3, caractérisé en ce que le coulisseau (12) d'égalisation d'épaisseur présente une section transversale sensiblement en forme de T, dont une branche forme la pièce de pressage (16) et les deux autres branches les deux éléments de fixation (17), ceux-ci maintenant également les ressorts de pression (18).

0 131 059

Fig. 2

Fig. 1

Fig. 3

21

Fig. 1'

21

2